# EUROPEAN PATENT SPECIFICATION

(11) **EP 4 049 169 B1**
(45) Date of publication and mention of the grant of the patent: **20.05.2026**
(21) Application number: 20711877.9
(22) Date of filing: 13.03.2020
(51) Int. Cl.: G01S 13/04, G06V 20/59, B60R 21/015

(54) **METHOD FOR DETECTING A PRESENCE OF AT LEAST ONE LIVING BEING INSIDE A CABIN OF A VEHICLE, SYSTEM OF A VEHICLE, COMPUTER PROGRAM PRODUCT AND COMPUTER-READABLE DATA CARRIER**
VERFAHREN ZUR ERKENNUNG DES VORHANDENSEINS VON MINDESTENS EINEM LEBEWESEN INNERHALB EINER KABINE EINES FAHRZEUGS, SYSTEM EINES FAHRZEUGS, COMPUTERPROGRAMMPRODUKT UND COMPUTERLESBARER DATENTRÄGER
PROCÉDÉ DE DÉTECTION DE LA PRÉSENCE D'AU MOINS UN ÊTRE VIVANT À L'INTÉRIEUR D'UNE CABINE D'UN VÉHICULE, SYSTÈME D'UN VÉHICULE, PRODUIT DE PROGRAMME INFORMATIQUE ET SUPPORT DE DONNÉES LISIBLE PAR ORDINATEUR

(30) Priority: 21.10.2019 DE 102019128332
(43) Date of publication of application: 31.08.2022
(73) Proprietor: HELLA GmbH & Co. KGaA, 59552 Lippstadt (DE)
(72) Inventor: ABOU-CHAHINE, Zeid, 59558 Lippstadt (DE); IRLE, Henning, 59557 Lippstadt (DE)
(74) Representative: Behr-Wenning, Gregor
(86) International application number: PCT/EP2020/056901
(87) International publication number: WO 2021/078414

(56) References cited:
- WO-A1-2019/012099
- US-A1- 2018 050 575
- US-A1- 2019 126 779

## Description

The present invention relates to a system of a vehicle for detecting a presence of at least one living being inside a cabin of a vehicle.

Such systems are already known in different embodiments.

Known systems of a vehicle for detecting a presence of at least one living being inside a cabin of said vehicle are engaging radar systems, cameras, capacitive sensors as well as systems combining the aforementioned technologies. Such systems are quite complicated to handle and expensive.

For example, from the WO 2019 012 099 A1 such a radar system is known, including at least one radar transmitting antenna, at least one radar receiving antenna and an evaluation and control unit for evaluating Doppler information from the received radar waves.

The living vehicle occupant detection system of the US 2018 050 575 A1 has a control unit that is mounted within a vehicle and a life detection unit that will indicate the presence and location of a heartbeat within the interior of the vehicle and that is communicatively coupled to the control unit.

Furthermore, the US 2019 126 779 A1 presents an occupant detection system including a transmitter provided adjacent to a first side face of a vehicle successfully transmitting a radio wave over a range covering a seat door located on a second side face of the vehicle, a receiver provided adjacent to the second side face receiving the radio wave transmitted from the transmitter and an occupant detection device including a reception intensity acquirer, an occupant detector and an opening and closing detector.

It is an object of the invention to provide a system of a vehicle for detecting a presence of at least one living being inside a cabin of said vehicle at a lower cost. Furthermore, by using the invention instead of using a camera, privacy concerns have not to be handled with.

This object of the invention is solved by a system of a vehicle for detecting a presence of at least one living being inside a cabin of said vehicle according to claim 1.

The inventive system of a vehicle for detecting a presence of at least one living being inside a cabin of said vehicle by means of radio signals comprises at least one transmission unit positioned at a transmission unit position inside said cabin designed and configured for transmitting at least one transmission signal towards a surveillance area of an interior of said cabin, at least two receiving units each positioned at a receiving unit position inside said cabin designed and configured for receiving responding signals from said surveillance area, each caused by a reflection of said transmission signal in said surveillance area, whereat all of said receiving unit positions are placed apart from each other and are positioned even over said interior and said responding signals are being received by anyone of said receiving units, an evaluation unit designed and configured for evaluating said responding signals in order to detect the presence of said living being in said surveillance area of said interior, whereat said evaluation unit is linked to said at least one transmission unit and said at least two receiving units in a signal transmitting manner, and at least one actuator, whereat said actuator is designed and configured to be triggered according to said detection of said presence of said living being, wherein, said at least one transmission unit is in total one transmission unit and said at least two receiving units are in total four receiving units, whereat said receiving unit positions are positioned at peripheral positions of said interior, namely at a front, a rear and on two sides of said interior of said cabin.

Said responding signals triggered by said at least one transmission signal depend on said living being to be detected as well as on the properties of so-called communication channels, thus areas between said transmission unit and said living being on one side and between said living being and said receiving units on the other side. These communication channels mainly depend on the properties of a medium between antennas of said at least one transmission unit and said receiving units including the direct path and reflected multipaths due to living beings and/or nonliving objects, which is dynamic and directly dependent on the geometry, positioning and materials of said medium in between said aforementioned antennas of said transmission unit and said receiving units. Said evaluated responding signals will be reflected from everything in between. In case of living beings, said responding signals will be often a combination of multipath signals that reflect not just from the living beings. Said responding signals are therefore a combination of several reflections. Also, one may think of a technique where before a living being is entering said vehicle, said responding signals depending on said communication channels are also being evaluated. During and after entering of said living being, the properties of said communication channels will be different and therefore this change will be detectable. Thus, said evaluation of said responding signals in said evaluation unit will yield different results depending on whether or not at least one living being is in said surveillance area of said interior of said vehicle. That way, a presence of said at least one living being can be detected.

A main advantage of the inventive system of a vehicle for detecting a presence of at least one living being inside a cabin of said vehicle is, that the presence of at least one living being inside a cabin of a vehicle can be detected with less cost and by keeping the privacy of living beings detected without further actions. Hereby, the surveillance area is surveilled from different positions. Furthermore, the communication channels to each of said receiving units are influenced in different ways by said at least one living being detected by said system, which enhances the detection of said at least one living being as well as the detection of said vital sign and/or said gesture of said living being, too. For example, radar systems or camera systems are quite expensive. Said triggered action of at least one actuator of said vehicle according to said detection of said presence of said living being could be of any useful and suitable manner. For example, displaying an alert to said driver to make sure, that every occupant of said vehicle has fasten his or her seatbelt.

Thus, the wording "for detecting a presence of at least one living being inside a cabin of a vehicle" can also mean "for detecting an occupancy of at least one space in an interior of a cabin by at least one living being inside said cabin of a vehicle". That means, with the invention not only a presence of at least one living being inside a cabin may be detected, but an occupancy of a certain space inside said cabin of said vehicle can be detected, too.

Of course, other systems of said vehicle can also be triggered. Another example is, that said actuator is built as a transmitter for transferring data from said vehicle to a cloud or another external receiver for further processing or statistics.

Further advantages developments of the inventive system are apparent from the subclaims as well as from the following description of an exemplary embodiment of the inventive system by means of the attached figure.

A particular preferably development of the inventive system is, said at least one transmission unit and said at least two receiving units are designed and configured to use Bluetooth^{™} frequency bands and/or Bluetooth^{™} protocols and/or to use WiFi^{™} frequency bands and/or WiFi^{™} protocols. Hereby, the inventive system can be realized with well-known technologies, which are already widely used. This is especially advantages, if Bluetooth^{™} and/or WiFi^{™} is already installed in said vehicle and in use for other systems. Thus, existing technical systems of said vehicle can be used for also another purpose, namely the invention. That means, no extra system has to be installed and configured, but an already existing system can be enhanced in its functionality.

The function of said transmitting unit and/or receiving units can be of any suitable manner.

A further preferably development of the system according to the invention is, that said transmission unit is designed and configured as one of said receiving units or one of said receiving units is designed and configured as said transmission unit. That way, said transmission unit or one of said receiving units is used in a double function, namely as said transmitter and as one of said receivers. Thus, the equipment needed is reduced and the cost for realizing the inventive system, too.

Still another advantageous development of the system according to the invention is, that said transmission unit is positioned at a front of said interior, preferably at a peripheral position of said interior. That way, said transmission unit is positioned in a very advantageous manner with respect to the transmission of said transmitting signal to said surveillance area with respect to said driver's seat. Thus, the very important driver's seat is surveilled by the inventive system in a very accurate manner.

The figure is a schematic illustration of an inventive system, wherein only the details necessary for the understanding of the invention are shown.

It is shown by the only figure:

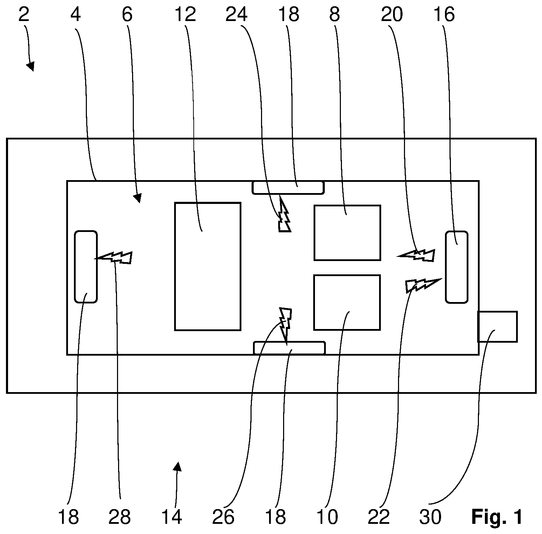

Fig. 1 an exemplary embodiment of the system according to the invention in a bird's eye view.

Fig. 1 displays an exemplary embodiment of the system according to the invention in a very schematic way.

In Fig. 1 a vehicle 2 is displayed, whereat said vehicle 2 is designed as an automobile. Said vehicle 2 comprises a cabin 4 with an interior 6 inside said cabin 4, whereat a driver's seat 8 for a driver of said vehicle 2, a front passenger seat 10 for a passenger and rear seats 12 for further passengers of said vehicle 2 are mounted inside said cabin 4. Furthermore, said vehicle 2 comprises a system 14 for detecting a presence of at least one living being inside said cabin 4 by means of radio signals, positioned in said interior 6 of said cabin 4. Said aforementioned driver and passengers are not displayed in Fig. 1.

Said system 14 for detecting a presence of at least one living being inside said cabin 4 by means of radio signals comprises one transmission unit 16 positioned at a transmission unit position inside said cabin 4 designed and configured for transmitting at least one transmission signal towards a surveillance area of said interior 6 of said cabin 4 and three receiving units 18 each positioned at a receiving unit position inside said cabin 4 each designed and configured for receiving responding signals from said surveillance area each caused by a reflection of said transmission signal in said surveillance area, whereat all of said receiving unit positions 18 are placed apart from each other and said responding signals are being received by anyone of said receiving units 18.

In this embodiment of the inventive system, said transmission unit 16 is designed and configured as one of said receiving units, too. Thus, said transmission unit 16 is also designed and configured for receiving said responding signals from said surveillance area, caused by a reflection of said transmission signal in said surveillance area. Thus, in total there are four receiving units 16, 18 positioned in said interior 6 inside said cabin 4.

As can be seen from Fig. 1, all of said receiving units 16, 18 are positioned even over said interior 6, namely at peripheral positions at a front, a rear and on two sides of said interior 6 of said cabin 4. Said transmitting unit 16 is positioned at said front of said interior 6 of said cabin 4, whereas said receiving units 18 are positioned at said rear and said two sides of said interior 6 of said cabin 4 of said vehicle 2.

Said transmission signal is symbolized in Fig. 1 by an arrow 20 and said responding signals are symbolized in Fig. 1 by arrows 22, 24, 26, 28.

Said transmission unit 16 and said receiving units 18 are each designed and configured to use WiFi^{™} frequency bands and/or WiFi^{™} protocols. Of course, in other embodiments of the invention, said transmission unit and said at least two receiving units can be designed and configured to use Bluetooth^{™} frequency bands and/or Bluetooth^{™} protocols or to use Bluetooth^{™} frequency bands and/or Bluetooth^{™} protocols and WiFi^{™} frequency bands and/or WiFi^{™} protocols, too.

Furthermore, said system 14 comprises an evaluation unit 30 designed and configured for evaluating said responding signals 22, 24, 26, 28 in order to detect the presence of said living being in said interior 6, whereat said evaluation unit 30 is linked to said transmission unit 16 and said receiving units 18 in a signal transmitting manner, and at least one actuator, whereat said actuator is designed and configured to be triggered according to said detection of said presence of said living being. Said actuator is not displayed in Fig. 1. Said evaluation unit 30 is designed and configured to process said responding signals 22, 24, 26, 28 according to the following:

Said responding signals 22, 24, 26, 28 triggered by said at least one transmission signal 20 depend on said living being to be detected as well as on the properties of so-called communication channels, thus areas between said transmission unit 16 and said living being on one side and between said living being and said receiving units 16, 18 on the other side. These communication channels mainly depend on the properties of a medium between antennas of said at least one transmission unit 16 and said receiving units 16, 18 including the direct path and reflected multipaths due to living beings and/or nonliving objects, which is dynamic and directly dependent on the geometry, positioning and materials of said medium in between said aforementioned antennas of said transmission unit 16 and said receiving units 16, 18. Said evaluated responding signals 22, 24, 26, 28 will be reflected from everything in between. In case of living beings, said responding signals 22, 24, 26, 28 will be often a combination of multipath signals that reflect not just from the living beings. Said responding signals 22, 24, 26, 28 are therefore a combination of several reflections. Also, one may think of a technique where before a living being is entering said vehicle 30, said responding signals 22, 24, 26, 28 depending on said communication channels are also being evaluated. During and after entering of said living being, the properties of said communication channels will be different and therefore this change will be detectable. Thus, said evaluation of said responding signals 22, 24, 26, 28 in said evaluation unit 30 will yield different results depending on whether or not at least one living being is in said surveillance area of said interior 6 of said vehicle 2. That way, a presence of said at least one living being in said surveillance area of said interior 6 of said vehicle 2 can be detected.

Said antennas of said transmitting unit 16 and of said receiving units 18 are not displayed in Fig. 1.

In the following, the function of the inventive system according to the invention is explained in detail by means of the embodiment displayed by Fig. 1.

Said driver of said vehicle 2 enters said cabin 4 of said vehicle 2 and sits down on said driver's seat 8 of said vehicle 2. Said driver starts an engine of said vehicle 2 and drives away. Said engine is not displayed in Fig. 1. Meanwhile, said system 14 of said vehicle 2 processes according to the invention for detecting a presence of at least one living being inside said cabin 4 of said vehicle 2 by means of radio signals, namely by using WiFi^{™} frequency bands and/or WiFi^{™} protocols, comprising the following steps: Transmitting said transmission signal 20 from said transmission unit 16 positioned at said transmission unit position inside said cabin 4 towards said surveillance area of said interior 6 of said cabin 4 and receiving responding signals 22, 24, 26, 28 from said surveillance area caused by said reflection of said transmission signal 20 in said surveillance area of said interior 6, for example, said driver sitting on said driver's seat 8 with said receiving units 18, each positioned at said receiving unit position inside said cabin 4, and said transmitting unit 16, which is designed and configured as a receiving unit, too. Thus, said surveillance area of said system 14 covers at least a place of said driver's seat 8 of said vehicle 2. Preferably, said surveillance area covers not only said place of said driver's seat 8 but a front-seat passenger place of a front-seat passenger or all places of passengers, too. Because of all of said receiving unit positions and said transmission unit position are placed apart from each other and said responding signals 22, 24, 26, 28 are being received by anyone of said receiving units 16, 18, all of said responding signals 22, 24, 26, 28 received by said receiving units 16, 18 are different to each other due to the aforementioned conditions of said communication channels.

After said responding signals 22, 24, 26, 28 were received by said receiving units 16, 18, said responding signals 22, 24, 26, 28 are evaluated by means of said evaluation unit 30, whereat said evaluation unit 30 is linked to said transmission unit 16 and said receiving units 18 in a signal transmitting manner, which is state of the art and not further explained. Said evaluation of said responding signals 22, 24, 26, 28 is processed according to said aforementioned conditions of said communication channels. Hereby, an already existing transmitting unit and already existing receiving units of said vehicle 2 can be used for the function. Thus, no extra transmitting unit 16 and/or receiving units 18 are necessary. Because of the fact, that said driver is sitting on said driver's seat 8 of said vehicle 2, the presence of said driver in said interior 6 according to said evaluation of said responding signals 22, 24, 26, 28 in said evaluation unit 30 is detected. According to said detected presence of said driver in said surveillance area of said interior 6 of said cabin 4 of said vehicle 2, an action of said actuator of said vehicle 2 is triggered. For example, said action can be designed and configured as a visual and/or acoustic alert informing said driver to fasten his or her seat belt. Of course, other actuators and other functions of said vehicle 2 can be triggered by said aforementioned detected presence of said driver, too.

Because of the inventive system for processing according to the aforementioned embodiment, a presence of at least one living being inside said cabin 4 of said vehicle 2 can be detected with less cost and by keeping the privacy of living beings detected without further actions. Said triggered action of at least one actuator of said vehicle according to said detection of said presence of said living being could be of any useful and suitable manner. For example, displaying an alert to said driver to make sure, that every occupant of said vehicle has fasten his or her seatbelt. Thus, said detection of a presence of at least one living being inside said cabin 4 of said vehicle 2 means a detection of an occupancy of at least one space in said interior 6 of said cabin 4 by at least one living being inside said cabin 4 of said vehicle 2. That means, with the invention according to the embodiment not only a pure presence of at least one living being inside said cabin 4 is being detected, but an occupancy of a certain space inside said cabin 4 of said vehicle 2 is being detected, too. Of course, other systems of said vehicle can be triggered, too.

The invention is not limited to the exemplary embodiment of the inventive system discussed before.

The invention can be advantageously used in other types of vehicles, too.

According to a further embodiment of the invention, said evaluation of said responding signals is configured to detect a vital sign of said driver, preferably of all of said living beings detected, whereat said action of said actuator is being triggered according to said detection of said vital sign. Hereby, the safety of said vehicle and of other traffic participants is enhanced. For example, in case of a negative vital sign of said driver of said vehicle an alert can be transmitted to an outside of said vehicle in order to alert other traffic participants that a dangerous situation may occur.

Another embodiment of the invention is, that said evaluation of said responding signals is configured to detect a gesture of said driver, preferably of all of said living beings detected, whereat said action of said actuator is being triggered according to said detection of said gesture. That way an alertness of said driver can be recognized. If an alertness of said driver is detected to be not sufficient for driving said vehicle, a visual and/or acoustic alert can be given to said driver by using a common human machine interface of said vehicle. Furthermore, it is possible to control certain functions of said vehicle by doing specific gestures.

### List of reference numbers

- 2: Vehicle
- 4: Cabin of said vehicle 2
- 6: Interior of said cabin 4
- 8: Driver's seat
- 10: Front passenger seat
- 12: Rear passenger seat
- 14: System
- 16: Transmission unit
- 18: Receiving unit
- 20: Transmission signal
- 22: Responding signal
- 24: Responding signal
- 26: Responding signal
- 28: Responding signal
- 30: Evaluation unit

## Claims

1. System (14) of a vehicle (2) for detecting a presence of at least one living being inside a cabin (4) of said vehicle (2) by means of radio signals, comprising at least one transmission unit (16) positioned at a transmission unit position inside said cabin (4) designed and configured for transmitting at least one transmission signal (20) towards a surveillance area of an interior (6) of said cabin (4), at least two receiving units (16, 18) each positioned at a receiving unit position inside said cabin (4) designed and configured for receiving responding signals (22, 24, 26, 28) from said surveillance area, each caused by a reflection of said transmission signal (20) in said surveillance area, whereat all of said receiving unit positions are placed apart from each other and are positioned even over said interior (6) and said responding signals (22, 24, 26, 28) are being received by anyone of said receiving units (16, 18), an evaluation unit (30) designed and configured for evaluating said responding signals (22, 24, 26, 28) in order to detect the presence of said living being in said surveillance area of said interior (6), whereat said evaluation unit (30) is linked to said at least one transmission unit (16) and said at least two receiving units (18) in a signal transmitting manner, and at least one actuator, whereat said actuator is designed and configured to be triggered according to said detection of said presence of said living being,
wherein,
said at least one transmission unit (16) is in total one transmission unit (16) and said at least two receiving units (16, 18) are in total four receiving units (16, 18), whereat said receiving unit positions are positioned at peripheral positions of said interior (6), namely at a front, a rear and on two sides of said interior (6) of said cabin (4).

2. System (14) according to claim 1,
wherein,
said transmission unit (16) is designed and configured as one of said receiving units or one of said receiving units is designed and configured as said transmission unit.

3. System (14) according to one of the claims 1 or 2,
wherein,
said transmission unit (16) is positioned at a front of said interior (6), preferably at a peripheral position of said interior (6).

## Patentansprüche

1. System (14) eines Fahrzeugs (2) zur Erkennung der Anwesenheit mindestens eines Lebewesens innerhalb einer Fahrgastzelle (4) des Fahrzeugs (2) mittels Funksignalen, umfassend mindestens eine Sendeeinheit (16), die an einer Sendeeinheit-Position innerhalb der Fahrgastzelle (4) angeordnet ist, gestaltet und konfiguriert zum Senden mindestens eines Sendesignals (20) in Richtung eines Überwachungsbereichs eines Innenraums (6) der Fahrgastzelle (4), mindestens zwei Empfangseinheiten (16, 18), die jeweils an einer Empfangseinheit-Position innerhalb der Fahrgastzelle (4) positioniert sind, gestaltet und konfiguriert zum Empfangen von Antwortsignalen (22, 24, 26, 28) aus dem Überwachungsbereich, die jeweils durch eine Reflexion des Sendesignals (20) in dem Überwachungsbereich verursacht werden, wobei alle Empfangseinheit-Positionen voneinander beabstandet platziert sind und gleichmäßig über den Innenraum (6) positioniert sind und die Antwortsignale (22, 24, 26, 28) von einer jeglichen der Empfangseinheiten (16, 18) empfangen werden, eine Auswerteeinheit (30), gestaltet und konfiguriert zum Auswerten der Antwortsignale (22, 24, 26, 28), um die Anwesenheit des Lebewesens in dem Überwachungsbereich des Innenraums (6) zu erkennen, wobei die Auswerteeinheit (30) mit der mindestens einen Sendeeinheit (16) und den mindestens zwei Empfangseinheiten (18) in einer signalübertragenden Weise verbunden ist, und mindestens einen Aktuator, wobei der Aktuator dazu gestaltet und konfiguriert ist, gemäß der Erkennung der Anwesenheit des Lebewesens ausgelöst zu werden,
wobei
die mindestens eine Sendeeinheit (16) insgesamt eine Sendeeinheit (16) ist und die mindestens zwei Empfangseinheiten (16, 18) insgesamt vier Empfangseinheiten (16, 18) sind, wobei die Empfangseinheit-Positionen an peripheren Positionen des Innenraums (6) positioniert sind, nämlich in einem vorderen Bereich, einem hinteren Bereich und an zwei Seiten des Innenraums (6) der Fahrgastzelle (4).

2. System (14) nach Anspruch 1,
wobei
die Sendeeinheit (16) als eine der Empfangseinheiten gestaltet und konfiguriert ist oder eine der Empfangseinheiten als die Sendeeinheit gestaltet und konfiguriert ist.

3. System (14) nach einem der Ansprüche 1 oder 2,
wobei
die Sendeeinheit (16) in einem vorderen Bereich des Innenraums (6) positioniert ist, vorzugsweise in einer peripheren Position des Innenraums (6).

## Revendications

1. Système (14) d'un véhicule (2) pour la détection de la présence d'au moins un être vivant à l'intérieur d'une cabine (4) dudit véhicule (2) au moyen de signaux radio, comprenant au moins une unité de transmission (16) positionnée à un emplacement d'unité de transmission à l'intérieur de ladite cabine (4), conçue et configurée pour transmettre au moins un signal de transmission (20) vers une zone de surveillance d'un intérieur (6) de ladite cabine (4), au moins deux unités de réception (16, 18) positionnées chacune à un emplacement d'unité de réception à l'intérieur de ladite cabine (4) et conçues et configurées pour recevoir des signaux de réponse (22, 24, 26, 28) provenant de ladite zone de surveillance, chacun résultant d'une réflexion dudit signal de transmission (20) dans ladite zone de surveillance, toutes lesdites positions d'unité de réception étant espacées les unes des autres et positionnées de manière uniforme au-dessus dudit intérieur (6) et lesdits signaux de réponse (22, 24, 26, 28) étant reçus par l'une desdites unités de réception (16, 18), une unité d'évaluation (30) conçue et configurée pour évaluer lesdits signaux de réponse (22, 24, 26, 28) afin de détecter la présence dudit être vivant dans ladite zone de surveillance dudit intérieur (6), ladite unité d'évaluation (30) étant reliée à une unité de transmission (16) au moins et aux deux unités de réception (18) au moins de manière à transmettre des signaux, et au moins un actionneur, ledit actionneur étant conçu et configuré pour être déclenché en fonction de ladite détection de ladite présence dudit être vivant,
sachant que
une unité de transmission (16) au moins constitue au total une unité de transmission (16) et deux unités de réception (16, 18) au moins constituent au total quatre unités de réception (16, 18), lesdites positions des unités de réception étant situées à des positions périphériques dudit intérieur (6), à savoir à l'avant, à l'arrière et sur deux côtés dudit intérieur (6) de ladite cabine (4).

2. Système (14) selon la revendication 1,
sachant que
ladite unité de transmission (16) est conçue et configurée comme l'une desdites unités de réception ou que l'une desdites unités de réception est conçue et configurée comme ladite unité de transmission.

3. Système (14) selon l'une des revendications 1 ou 2,
sachant que
ladite unité de transmission (16) est positionnée à l'avant dudit intérieur (6), de préférence à une position périphérique dudit intérieur (6).
